# EUROPÄISCHE PATENTSCHRIFT

(11) **EP 2 718 907 B1**
(45) Veröffentlichungstag und Bekanntmachung des Hinweises auf die Patenterteilung: **01.02.2017**
(21) Anmeldenummer: 12723607.3
(22) Anmeldetag: 15.05.2012
(51) Int. Cl.: G06Q 10/08, B65D 90/48, G07C 5/00, G07C 5/08, G08B 25/10

(54) **VERFAHREN UND SYSTEM ZUR ÜBERWACHUNG DER INTEGRITÄT VON FRACHTBEHÄLTNISSEN**
METHOD AND SYSTEM FOR MONITORING THE INTEGRITY OF FREIGHT CONTAINERS
PROCÉDÉ ET SYSTÈME DE SURVEILLANCE DE L'INTÉGRITÉ DE RÉCEPTACLES DE FRET

(30) Priorität: 07.06.2011 DE 102011106202
(43) Veröffentlichungstag der Anmeldung: 16.04.2014
(73) Patentinhaber: Astrium GmbH, 81667 München (DE)
(72) Erfinder: BUSCH, Wolfgang, 28832 Achim (DE); HORNBOSTEL, Klaus, 28215 Bremen (DE)
(74) Vertreter: Aulich, Martin
(86) Internationale Anmeldenummer: PCT/EP2012/002072
(87) Internationale Veröffentlichungsnummer: WO 2012/167864

(56) Entgegenhaltungen:
- DE-A1-102009 013 104
- US-A- 4 750 197
- US-A1- 2004 041 705
- US-A1- 2006 164 235
- US-A1- 2008 297 346

## Beschreibung

Die vorliegende Erfindung betrifft ein Verfahren und eine System zur Überwachung eines oder mehrerer Frachtbehältnisse entlang eines Transportwegs, wobei mindestens ein Frachtbehältnis eine diesem zugeordnete Überwachungseinrichtung aufweist, die über mindestens einen, die Integrität des Frachtbehältnisses überwachenden Überwachungssensor verfügt, wobei nach der Erfassung eines die Frachtbehältnis-Integrität verletzenden Ereignisses durch den Überwachungssensor einem entfernten Analysezentrum Ereignisdaten übermittelt werden, die die Integritätsverletzung repräsentieren, wobei in dem Analysezentrum die übermittelten Ereignisdaten anhand vorbestimmter Kriterien im Hinblick auf eine entweder berechtigte - autorisierte - oder eine unberechtigte - unautorisierte - Integritätsverletzung des Frachtbehältnisses bewertet werden, und wobei ein Öffnen oder ein Verschließen des Frachtbehältnisses als berechtigte bzw. autorisierte Integritätsverletzung bewertet wird, falls dem Analysezentrum zu den diese Integritätsverletzung repräsentierenden Ereignisdaten ein die Berechtigung des Öffnungsvorgangs bzw. des Schließvorgangs repräsentierender, elektronischer Autorisierungscode übersendet wird.

Ein derartiges Verfahren zur Überwachung von Frachtbehältnissen ist in der DE 10 2009 013 104 A1 offenbart. Hintergrund eines solchen Überwachungsverfahrens bzw. eines derartigen Überwachungssystems ist die Tatsache, dass national und international im Frachtgeschäft die Anforderungen an die Sicherheit von Frachtbehältnissen bzw. von Transportcontainern immer weiter ansteigt. Als besonders groß wird die Gefahr eingestuft, dass einzeine Frachtbehältnisse nach einem Beladevorgang durch autorisiertes Personal auf dem Transportweg von Terroristen geöffnet und mit Sprengsätzen oder dergleichen versehen werden, die am Zielort des Frachtbehältnisses detonieren sollen.

Mit dem eingangs erwähnten Verfahren bzw. System ist es möglich, die Integrität von Frachtbehältnissen ausgehend von der Beladung desselben über dessen Transportweg bis zum Zielort möglichst lückenlos nachzuverfolgen.

Es ist Aufgabe der vorliegenden Erfindung, ein derartiges Verfahren sowie ein derartiges System weiterzuentwickeln.

Diese Aufgabe wird gelöst durch ein Verfahren mit den Merkmalen des Anspruchs 1 sowie ein System mit den Merkmalen des Anspruchs 11.

Erfindungsgemäß werden zur Unterscheidung von einzelnen Öffnungsvorgängen und/oder zur Unterscheidung von einzelnen Schließvorgängen jeweils Autorisierungscodes aus unterschiedlichen Funktionsgruppen, im Folgenden auch Funktionscodes genannt, verwendet, sodass im entfernten Analysezentrum anhand der Art bzw. der Funktionsgruppenzugehörigkeit des jeweils empfangenen Funktionscodes bestimmt werden kann, welcher Öffnungsvorgang bzw. welche Art von Öffnungsvorgang und/oder Schließvorgang erfolgt ist bzw. erfolgen soll.

Die Verwendung von unterschiedlichen Arten von Funktionscodes bei der Autorisierung eines Öffnungs- und/oder eines Schließvorgangs eines Frachtbehälters ermöglicht im Analysezentrum eine einfache und wirksame Statusbestimmung des jeweils zu überwachenden Frachtbehältnisses. Wenn beispielsweise zu Beginn eines Transports ein Frachtbehältnis von hierzu berechtigtem Personal erstmalig autorisiert verschlossen werden soll, würde die berechtigte Person vor Ort, das heißt diejenige Person, die den Frachtbehälter zunächst physisch schließen möchte, einen geeigneten elektronischen Autorisierungscode bzw. Funktionscode verwenden, der speziell für ein solches erstmaliges Schließen ausgebildet ist.

Wenn demnach die berechtigte Person vor Ort ein solches erstmaliges Verschließen des Frachtbehältnisses autorisieren möchte, sendet sie im Zusammenhang mit dem physischen Schließvorgang des Frachtbehältnisses, in der Regel dem Schließen einer entsprechenden Frachtbehältnistür, einen spezifischen Funktionscode der Art "erstmaliges Verschließen" an das Analysezentrum.

Bei Empfang des Autorisierungs- bzw. des Funktionscodes kann das Analysezentrum diesen dann zum einen daraufhin prüfen, ob er für die Autorisierung geeignet ist. Mit anderen Worten wird unter anderem auf Echtheit etc. desselben geprüft.

Zum anderen kann aber erfindungsgemäß im Analysezentrum schon allein anhand der Art des Funktionscodes erkannt werden, dass es sich bei dem Schließvorgang des Frachtbehältnisses gerade um das beschriebene, erstmalige Verschließen des Frachtbehältnisses handelt, das heißt um ein Verschließen desselben zu Beginn des Transports. In einer geeigneten Statusverwaltung im Analysezentrum kann dann für das entsprechende Frachtbehältnis der Status "erstmalig verschlossen" eingegeben bzw. gesetzt werden.

In weiterer Ausbildung der Erfindung kann vorgesehen sein, dass eine Zwischenöffnung des Frachtbehälters vor Abschluss des Transports, das heißt in der Regel bevor das Frachtbehältnis seinen Zielort erreicht hat, mit einer anderen Art von Funktionscode autorisiert wird als eine nachfolgende Öffnung, beispielsweise insbesondere eine Endöffnung am Zielort. Weiter ist denkbar, über die Funktionscodeart auch einzelne Zwischenöffnungen untereinander zu unterscheiden, beispielsweise eine erste Zwischenöffnung von einer nachfolgenden weiteren, zweiten Zwischenöffnung abzugrenzen usw.

Anhand des jeweils übermittelten Funktionscodes kann das Analysezentrum allgemein den Status des Frachtbehältnisses erkennen und gegebenenfalls eine bzw. die Statusverwaltung entsprechend aktualisieren.

Mithilfe der unterschiedlichen Funktionscodearten sind in der Regel mittelbar auch Ortsinformationen über den jeweiligen Standort des Frachtbehältnisses zu dem Zeitpunkt ableitbar, zu dem die Autorisierung des jeweiligen Öffnungs- bzw. Schließvorgangs vorgenommen wird. Denn unter der Voraussetzung einer ordnungsgemäßen Abfertigung und eines ordnungsgemäßen Transports des jeweiligen Frachtbehältnisses wird beispielsweise eine Autorisierung mit dem Funktionscode der Art "erstmaliges Verschließen" in der Regel am Belade- bzw. Startort des Frachtbehältnisses erfolgen. Bei Empfang dieses Funktionscodes im Analysezentrum kann daher rückgeschlossen werden, dass sich das Frachtbehältnis am Startort befindet. Eine Autorisierung mit dem Funktionscode der Art "Endöffnung" wird üblicherweise am Zielort des Frachtbehältnisses erfolgen. Autorisierungen der Art "Zwischenöffnungen" wiederum werden an vorher festgelegten Orten entlang des Transportwegs des Frachtbehältnisses vorgenommen. Insgesamt ist es daher unter den genannten Bedingungen nicht zwingend erforderlich, eine direkte Ortung des jeweiligen Frachtbehältnisses über GPS etc. vorzunehmen.

Zweckmäßigerweise verfügen die Funktionscodes gleicher Art bzw. aus derselben Funktionsgruppe über ein gemeinsames Kennzeichen, mittels dessen das Analysezentrum die Funktionscodes unterschiedlicher Funktionscodearten hinsichtlich ihrer Funktionsgruppenzugehörigkeit unterscheiden kann. Ein solches Kennzeichen kann vielfältiger Art sein, etwa bestimmte Zahlen oder Buchstaben oder Kombinationen derselben innerhalb des elektronischen Autorisierungs- bzw. Funktionscodes.

In weiterer Ausbildung der Erfindung wertet das Analysezentrum übermittelte Ereignisdaten eines ersten Sensors oder einer ersten Gruppe von Sensoren der Überwachungseinrichtung nicht weiter aus, nachdem es einen Funktionscode für eine autorisierte Zwischenöffnung des Transportbehälters sowie die dem Zwischenöffnungsvorgang des Frachtbehältnisses zugeordnete Ereignisdaten empfangen hat. Ereignisdaten mindestens eines zweiten Sensors bzw. mindestens einer zweiten Gruppe von Sensoren der Überwachungseinrichtung werden dagegen weiter ausgewertet.

Beispielsweise kann das Analysezentrum die Bewertung bzw. Überwachung von ihm übermittelten Ereignisdaten eines Türsensors, der den Zustand - geschlossen oder geöffnet - der Tür des Frachtbehältnisses überwacht, nach der autorisierten Zwischenöffnung, d.h. nach Empfang des entsprechenden Funktionscodes sowie der zugeordneten Sensordaten, zunächst einstellen. Die etwa von einem Sensor zur Messung der Temperatur im Inneren des Frachtbehälters übermittelten Ereignisdaten dagegen können auch während einer Zwischenöffnung ausgewertet bzw. analysiert werden.

So kann in einem Ausführungsbeispiel im Analysezentrum beispielsweise ein mehrmaliges Öffnen oder Schließen der Frachtbehältnistür nach einer autorisierten Zwischenöffnung (und vor einem erneuten autorisierten Verschließen) unbeachtet bleiben bzw. es würden die entsprechenden, im Analysezentrum eintreffenden Türsensorsignale nicht weiter bewertet, sodass kein Alarmzustand ausgelöst werden würde. Somit können nach der autorisierten Zwischenöffnung bequem Kontroll-, Belade- und/oder Entladevorgänge durchgeführt werden.

Im Gegensatz dazu können beispielsweise die Signale eines Temperatursensors im Inneren des Frachtbehältnisses weiterhin ausgewertet werden.

Ein solches Szenario ist insbesondere relevant für die Überwachung von Frachtbehältnissen mit Kühleinrichtung. Im Analysezentrum kann auf diese Weise auch im Anschluss an eine autorisierte Zwischenöffnung eines solchen, beispielsweise temperaturkritische Nahrungsmittel oder dergleichen aufweisenden Kühlfrachtbehältnisses dessen Innentemperatur überwacht und ein Alarmzustand ausgelöst werden, sollte sich die Temperatur während der Zwischenöffnung zu stark erhöhen.

Bei einer autorisierten Endöffnung des Frachtbehältnisses kann wiederum vorgesehen sein, dass ein entsprechender Funktionscode verwendet wird, nach dessen Empfang das Analysezentrum weder die Ereignisdaten des ersten Sensors bzw. der ersten Gruppe von Sensoren, noch die des zweiten Sensors bzw. der zweiten Gruppe von Sensoren weiter auswertet. In diesem Fall bleiben sämtliche Ereignisdaten unbeachtet, die die Überwachungseinrichtung im Anschluss an die autorisierte Endöffnung noch in das Analysezentrum liefert.

Bei Überwachung mehrerer Frachtbehältnisse ist vorzugsweise jedem Frachtbehältnis eine eigene Überwachungseinrichtung zugeordnet. Jeder Überwachungseinrichtung ist zur Erhöhung der Sicherheit des erfindungsgemäßen Verfahrens dabei eine Menge von Funktionscodes eindeutig zugewiesen. Die der jeweiligen Überwachungseinrichtung zugewiesenen Funktionscodes der Menge von Funktionscodes können nur für Autorisierungen von Öffnungs- oder Schließvorgängen desjenigen Frachtbehältnisses eingesetzt werden, dem die der Menge von Funktionscodes zugewiesene Überwachungseinrichtung zugeordnet ist. Aus diesem Grund können mit diesen Funktionscodes keine Öffnungs- oder Schließvorgänge anderer Frachtbehältnisse autorisiert werden, denen (die) andere(n) Überwachungseinrichtungen zugeordnet sind. Denkbar ist dabei, dass dies jedenfalls ab dem Zeitpunkt gilt, ab dem dasjenige Frachtbehältnis erstmalig geschlossen wurde, dessen Überwachungseinrichtung die jeweilige Menge von Funktionscodes zugewiesen wurde.

In der Regel wird des Weiteren vorgesehen werden, dass jeder Funktionscode nur zur Autorisierung eines einzigen Öffnungsvorgangs oder eines einzigen Schließvorgangs des jeweiligen Frachtbehältnisses eingesetzt werden kann, sodass nach erstmaliger Verwendung eines Funktionscodes mit diesem Funktionscode kein weiterer Öffnungs- oder Schließvorgang autorisiert werden kann. Die Funktionscodes verlieren nach einmaliger (erfolgreicher) Autorisierung ihre Gültigkeit.

Gemäß einer weiteren Ausführungsform der Erfindung kann für eine autorisierte Zwischenöffnung des Frachtbehältnisses ein Funktionscode einer Funktionsgruppe bzw. einer Funktionscodeart verwendet werden, der so ausgebildet ist, dass das Analysezentrum nach dessen Empfang einen nächsten folgenden physischen Schließvorgang des Frachtbehältnisses (in der Regel ein Schließen einer Frachtbehältnistür) automatisch als autorisiert erfolgt wertet. Zweckmäßigerweise sind des Weiteren (zeitliche) Gültigkeitsdauern für Funktionscodes vorgesehen.

So kann beispielsweise vorgesehen sein, dass ein Öffnungsvorgang nur dann als autorisiert erfolgt gewertet wird, falls die (physische) Öffnung des Frachtbehältnisses (Frachtbehältnistür) innerhalb einer vorgegebenen Zeitspanne nach Empfang des entsprechenden Funktionscodes zur Autorisierung dieses Öffnungsvorgangs durch das Analysezentrum erfolgt.

Auf diese Weise verliert ein Funktionscode, der für ein solch autorisiertes Öffnen verwendet wurde, bei dem der physische Öffnungsvorgang außerhalb der vorgegebenen Zeitspanne erfolgt ist, seine Gültigkeit, sodass er nicht erneut für eine Autorisierung eines Öffnungsvorgangs eingesetzt werden kann.

Nach Entfall der Gültigkeit eines Funktionscodes kann dieser bestimmte Funktionscode nicht mehr für spätere Autorisierungen eingesetzt werden. Im Analysezentrum würde beispielsweise ein Alarmzustand ausgelöst werden, sollte versucht werden, einen späteren physischen Öffnungsvorgang mithilfe eines solchermaßen ungültigen Funktionscodes zu autorisieren.

Zumindest theoretisch ist es auch denkbar, die Funktionscodes für ein autorisiertes Verschließen des Frachtbehältnisses mit einer solchen Gültigkeitsdauer zu versehen.

Weitere Merkmale der Erfindung ergeben sich aus den beigefügten Patentansprüchen, der nachfolgenden Beschreibung eines bevorzugten Ausführungsbeispiels, sowie der beigefügten Zeichnung. Darin zeigt:

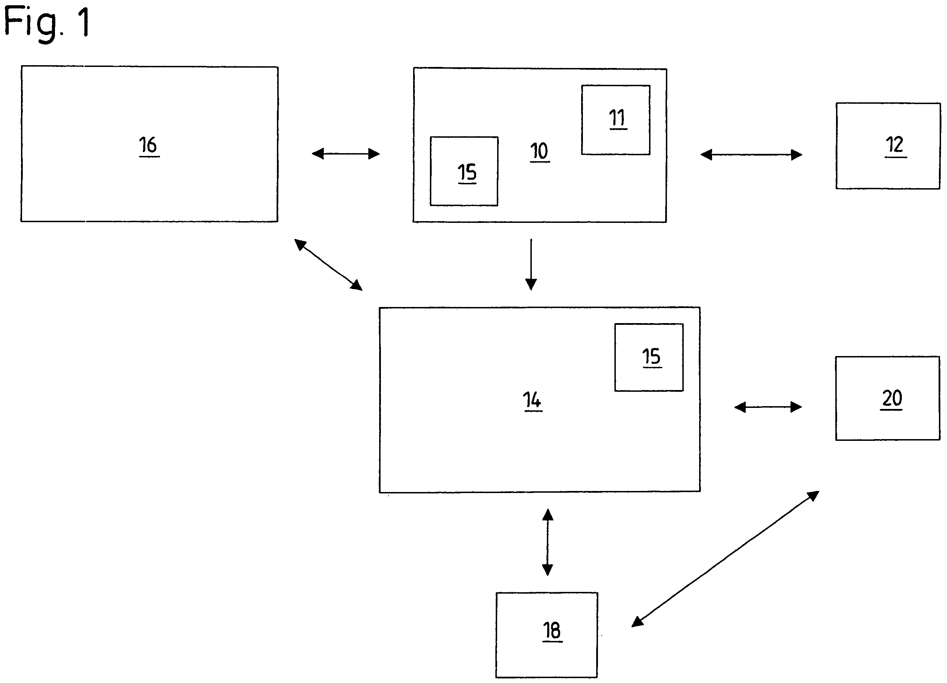

- Fig. 1: ein schematisches Blockschaltbild eines erfindungsgemäßen Systems zum Überwachen der Integrität eines Frachtbehältnisses, das gemäß dem erfindungsgemäßen Verfahren betrieben wird.

Ein wichtiger Bestandteil des erfindungsgemäßen Systems zur Überwachung von Frachtbehältnissen gemäß Fig. 1 ist zum einen eine Überwachungseinrichtung 10.

Diese Überwachungseinrichtung 10 verfügt über ein oder mehrere Sensoren 12, mit denen ein Frachtbehältnis, im vorliegenden Beispiel ein See-, Land- und/oder Normcontainer, üblicherweise aus Stahl, überwacht werden kann.

Die Überwachungseinrichtung 10 liefert bei einer Verletzung der Integrität des Containers Ereignisdaten, die diese Verletzung repräsentieren. Eine Integritätsverletzung umfasst dabei insbesondere das Öffnen und/oder das Schließen einer oder mehrerer Belade- oder Zugangstüren zu dem Container, und zwar unabhängig davon, ob dieses Öffnen/Schließen berechtigt bzw. autorisiert erfolgt oder nicht.

Der oder die Sensoren 12 stehen mit einer Steuereinheit 11 der Überwachungseinrichtung 10 in Betriebskommunikation. Die Kommunikation zwischen Steuereinheit 11 und Sensor 12 kann drahtgebunden erfolgen, aber auch drahtlos per Funk oder dergleichen.

Die Überwachungseinrichtung 10 wird bevorzugt mitsamt dem Sensor 12 innerhalb des zu überwachenden Containers positioniert und dort mittels geeigneter Maßnahmen befestigt.

Mit dem erfindungsgemäßen System wird in der Regel nicht nur ein Container überwacht, sondern eine Vielzahl von Containern. Dabei werden den jeweiligen Containern des Systems jeweils gleichartige Überwachungseinrichtungen 10 zugeordnet. Die Zuordnung der jeweiligen Überwachungseinrichtungen 10 zu den jeweiligen Transportcontainern erfolgt üblicherweise zu Beginn eines Transportes.

In der Regel wird ein Transport eines Transportcontainers von einem Belade-oder Start-ort zu einem Zielort durch ein Logistikunternehmen organisiert. Gegebenenfalls beauftragt dieses Logistikunternehmen einen externen Versender mit der eigentlichen Beladung des Containers und dem eigentlichen Transport desselben.

Der Versender rüstet den jeweils für einen Transport vorgesehenen Transportcontainer mit der Überwachungseinrichtung 10 aus. Anschließend wird die Überwachungseinrichtung 10 durch Betätigung eines entsprechenden Ein-/Aus-Schalters eingeschaltet. Um sämtliche Funktionen der Überwachungseinrichtung 10 zu gewährleisten, verfügt diese über eine geeignete, autarke Energieversorgung, etwa über entsprechende Batterien oder Akkumulatoren.

Ab dem Einschaltvorgang beginnt die Überwachungseinrichtung 10 bzw. beginnen der oder die Sensoren 12 derselben, den Container zu überwachen.

In der Regel ist mindestens einer der Sensoren 12 als den Status der Tür (geöffnet oder geschlossen) des Transportcontainers überwachender Türsensor ausgebildet. Einer der Sensoren 12 kann des Weiteren ein Bewegungssensor sein, der Bewegungen innerhalb des Container und/oder Bewegungen des Containers selbst überwacht. Weiter ist denkbar, Detektoren einzusetzen, die explosive Sprengstoffe erkennen können oder gefährliche Strahlung, insbesondere radioaktive Strahlung. Der oder die Sensoren 12 erzeugen dabei ab dem Einschaltvorgang der Überwachungseinrichtung 10 geeignete Daten.

Zusätzlich können Sensoren eingesetzt werden, die nicht vornehmlich zur Erfassung einer auf Manipulationen beruhenden Integritätsverletzung dienen, wie etwa Temperatursensoren. Insbesondere bei Kühlcontainern, also Transportcontainern mit Kühleinrichtung, mit denen beispielsweise verderbliche Waren (Nahrungsmittel, Arzneien etc.) transportiert werden, ist die Überwachung der Innentemperatur des Containers wichtig.

Jede Überwachungseinrichtung 10 des erfindungsgemäßen Systems ist durch geeignete drahtlose Datenübertragungstechniken, bevorzugt Kommunikationstechniken unter Einbeziehung von Satelliten (Funk), mit einem Analysezentrum 14 verbunden bzw. verbindbar. Dazu weisen die Überwachungseinrichtungen 10 sowie das Analysezentrum 14 jeweils geeignete Kommunikationsmodule 15 auf, nämlich Sende- und/oder Empfangsmodule, insbesondere funkbasiert. Hierfür geeignete Sende- und/oder Empfangsmodule sind inklusive der dafür notwendigen Antennentechnik im Stand der Technik bekannt und werden hier nicht näher erläutert.

Bevorzugt im Anschluss an die zuvor bereits beschriebene Installation einer Überwachungseinrichtung 10 in dem jeweiligen Transportcontainer wird dieser erstmalig mit dem zu befördernden Frachtgut beladen. Grundsätzlich kann das Beladen natürlich auch vor der Installation der Überwachungseinrichtung 10 erfolgen.

Um sicherheitstechnischen Anforderungen gerecht werden zu können, wird erfindungsgemäß sichergestellt, dass das Beladen und Verschließen des Containers nachweislich von einer dazu berechtigten Person vorgenommen wird:
Zu diesem Zweck sieht das System die Verwendung von elektronischen Autorisierungscodes vor. Mithilfe der Autorisierungscodes können Verletzungen der Integrität des Containers autorisiert werden. Insbesondere kann ein Öffnen und/oder ein Verschließen einer Containerzugangstür auf diesem Wege als berechtigt gekennzeichnet werden.

Die Autorisierungscodes umfassen bei der vorliegenden Ausführungsform insbesondere digitale Zertifikate, mit denen die Identität der den jeweiligen Autorisierungscode übermittelnden, berechtigten Person überprüfbar ist. Weiter umfassen die Autorisierungscodes Daten, die die jeweilige Überwachungseinrichtung 10 und/oder den jeweiligen Container eindeutig kennzeichnen, für die Autorisierungscodes jeweils eingesetzt werden.

Weiter umfassen die Autorisierungscodes Daten, die ihnen jeweils eine bestimmte Funktion zuordnen bzw. die sie kenntlich machen, einer bestimmten Funktionsgruppe zugehörig zu sein. Dies wird später noch näher ausgeführt.

Die Autorisierungscodes sind dabei zuvor von entsprechenden Computereinrichtungen in dem Analysezentrum 14 generiert und der berechtigten Person von dem Analysezentrum 14 übermittelt worden. Die Übermittlung kann dabei etwa über entsprechend gesicherte, elektronische Datentransportwege erfolgen.

Zur Erhöhung der Sicherheit kann dabei vorgesehen sein, dass die Autorisierungscodes der berechtigten Person erst nach einem erstmaligen Verschließen des Containers am Belade- bzw. Startort des Containers übermittelt werden.

In einer Variante der Erfindung werden die elektronischen Autorisierungscodes von dem Analysezentrum 14 unmittelbar per Datenfernübertragung einer als Handgerät - beispielsweise als Handheld - ausgebildeten Autorisierungseinrichtung 16 übertragen. Beispielsweise ist denkbar, dass sich die berechtigte Person die Autorisierungscodes über eine gesicherte, drahtlose Internetverbindung von einem entsprechenden Server des Analysezentrums 14 auf die Autorisierungseinrichtung 16 herunterlädt. In der Autorisierungseinrichtung 16 bzw. einem der Autorisierungseinrichtung 16 zugeordneten Speicher werden die Autorisierungscodes anschließend gespeichert.

Nach dem erstmaligen Beladen des Containers verschließt die dazu berechtigte Person die Tür desselben. Dieser Verschließvorgang führt zu einem Signal des Türsensors 12 der Überwachungseinrichtung 10. Denn in dem installierten und eingeschalteten Zustand der Überwachungseinrichtung 10 führt jede Integritätsverletzung, also in diesem Fall jedes Verschließen und jedes Öffnen der Zugangstür des Containers, zu einem derartigen Türsensorsignal. Das erzeugte Signal bzw. entsprechende Ereignisdaten, die dieses Signal repräsentieren, werden unmittelbar anschließend automatisch über die Kommunikationsmodule 15 per drahtloser Datenfernübertragung an das Analysezentrum 14 übertragen. Das Übertragen der Ereignisdaten wird demnach durch die Erfassung des Öffnens der Tür durch den Türsensor 12 ausgelöst bzw. getriggert.

Die berechtigte Person kann den Schließvorgang autorisieren, um zu verhindern, dass das Schließsignal im Analysezentrum 14 einen Alarm auslöst.

Dazu kann die berechtigte Person mittels der Autorisierungseinrichtung 16 die Übertragung eines der zuvor der Autorisierungseinrichtung 16 übermittelten, für die Autorisierung geeigneten Codes an das Analysezentrum 14 initiieren. Dazu positioniert sich die berechtigte Person mit der Autorisierungseinrichtung 16 in der Hand vor dem Container. Durch Betätigung geeigneter Steuerelemente der Autorisierungseinrichtung 16 wird eine Übertragung eines der Codes initiiert, und zwar per drahtloser Kurzstreckendatenübertragung zunächst ausgehend von der Autorisierungseinrichtung 16 hin zu der Überwachungseinrichtung 10. Die Autorisierungseinrichtung 16 und die Überwachungseinrichtung 10 verfügen zu diesem Zweck über für Kurzstreckendatenübertragung geeignete Kommunikationsmodule.

Die Übertragungseinrichtung 10 leitet den ihr übermittelten Code über die Kommunikationsmodule 15 anschließend an das Analysezentrum 14 weiter. Die übertragenen Autorisierungscodes werden nachfolgend in einem der dem Analysezentrum 14 zugeordneten Speicher abgespeichert.

In einer dem Analysezentrum 14 zugeordneten Analyseeinrichtung 18 erfolgt die Bewertung des übermittelten Schließsignals im Hinblick darauf, ob der Schließvorgang autorisiert oder unautorisiert erfolgt war. Die Analyseeinrichtung 18 kann zu diesem Zweck beispielsweise eine geeignet ausgebildete Steuerungseinrichtung sein und/oder eine mit geeigneter Software ausgebildete Computereinrichtung. Sie überprüft, ob in dem dem Analysezentrum 14 zugeordneten Speicher jeweils zeitgleich zu dem Eintreffen der das Schließen der Tür repräsentierenden Ereignisdaten oder in einer festgelegten Zeitspanne davor (theoretisch denkbar ist auch in einer festgelegten Zeitspanne danach) ein passender Autorisierungscode eingetroffen ist. Die Analyseeinrichtung 18 greift hierfür auf den dem Analysezentrum 14 und somit auch ihr zugeordneten Speicher zu.

Die Analyseeinrichtung 18 überprüft des Weiteren mittels geeigneter Algorithmen insbesondere die Gültigkeit und/oder Echtheit des jeweils übermittelten Autorisierungscodes. Sie vergleicht den übermittelten Autorisierungscode mit in einem oder dem der Analyseeinrichtung 18 bzw. dem Analysezentrum 14 zugeordneten Speicher hinterlegten Autorisierungscodeparametern. Diese Autorisierungscodeparameter müssen in diesem Fall mit dem übermittelten Autorisierungscode übereinstimmen oder in geeigneten Beziehungen zu diesem stehen, damit letzterer als gültig bzw. echt bewertet wird. Bevorzugt sind die Autorisierungscodeparameter in einer in dem Speicher installierten Datenbank abgespeichert.

Falls demnach die zum Schließvorgang berechtigte Person in der oben beschriebenen Weise in unmittelbarer und festgelegter zeitlicher Nähe zu dem Schließen der Containertür dem Analysezentrum 14 einen geeigneten Autorisierungscode übersendet, wird das Schließen der Tür von der Analyseeinrichtung als autorisiert erfolgt bewertet.

Daraufhin wird entsprechend im Analysezentrum keine Alarmmeldung erzeugt.

Etwas anderes gilt allerdings, wenn während des Transportweges nicht berechtigte Personen die Integrität des Containers unberechtigt verletzen sollten, indem sie beispielsweise über die Tür des Containers in dessen Innenraum eindringen.

In diesem Fall erzeugt der Türsensor 12 zunächst erneut entsprechende Ereignisdaten, d.h. Daten, die die Integritätsverletzung - in diesem Fall die Türöffnung - repräsentieren.

Auch diese Ereignisdaten werden automatisch an das Analysezentrum 14 übertragen. In dem vorliegenden Fall des unberechtigten Öffnens des Containers wird allerdings naturgemäß dem Analysezentrum 14 kein geeigneter Autorisierungscode übertragen. In dem dem Analysezentrum 14 zugeordneten Speicher ist entsprechend kein zur Autorisierung des Öffnungsvorgangs geeigneter Autorisierungscode gespeichert.

Demzufolge liefert die nachfolgende Bewertung der das Öffnungssignal repräsentierenden Ereignisdaten das Ergebnis, dass die Öffnung unautorisiert erfolgt sein muss. Die entsprechende Bewertung führt wiederum die Analyseeinrichtung 18 durch, die zu diesem Zweck in der bereits beschriebenen Weise wiederum den dem Analysezentrum 14 zugeordneten Speicher ausliest. Dabei wird festgestellt, dass dort kein geeigneter Autorisierungscode gespeichert ist.

In Reaktion auf die Bewertung der Öffnung als unautorisiert können geeignete Maßnahmen eingeleitet werden. Beispielsweise kann mittels eines Signalgebers ein einen Alarmzustand repräsentierendes Alarmsignal erzeugt werden.

Dieses Alarmsignal kann beispielsweise unmittelbar im Analysezentrum 14 von einer entsprechenden Person wahrgenommen werden, die im Anschluss geeignete Maßnahmen einleitet. Diese kann etwa eine Sicherheitsbehörde benachrichtigen, die den betreffenden Container untersucht. Das Alarmsignal kann auch verschiedenen anderen privaten oder behördlichen Instanzen zugeleitet werden.

Die Alarmsignale können verschiedenster Art sein, beispielsweise akustische, optische, elektrische oder elektronische Signale. Im einfachsten Fall kann die dem Analysezentrum 14 zugeordnete Analyseeinrichtung 18 die Versendung einer entsprechenden E-Mail oder eine SMS an eine private oder behördliche Instanz initiieren.

Insbesondere insofern die Überwachungseinrichtung 10 ein geeignetes Ortungs- oder Positionsbestimmungsmodul aufweist, etwa ein GPS-Modul, kann des Weiteren problemlos der genaue Standort des betreffenden Containers geortet werden.

In einem anderen von der Erfindung erfassten Szenario erfolgt die Öffnung des Containers - anders als in dem vorstehend beschriebenen Fall - autorisiert. Dies kann neben einer Endöffnung am Zielort des Containers auch dann sinnvoll sein, wenn der Container auf dem Transportweg vor Erreichen des eigentlichen Endzielortes mit weiterem Frachtgut zwischenbeladen werden soll.

Erfindungsgemäß kann eine zu der Zwischenbeladung bzw. einer Zwischenöffnung berechtigte Person den Container öffnen, ohne unmittelbar einen Alarm auszulösen. Der Öffnungsvorgang des Containers wird zwar in der oben beschriebenen Weise wiederum von dem entsprechenden Sensor 12 der Überwachungseinrichtung 10 erfasst und entsprechende Ereignisdaten, die diesen Öffnungsvorgang repräsentieren, werden in der Folge dem Analysezentrum 14 übersandt. Wenn die berechtigte Person in analoger Weise wie bei dem weiter oben beschriebenen Verschließvorgang allerdings einen geeigneten Autorisierungscode innerhalb der festgelegten zeitlichen Grenzen an das Analysezentrum 14 versendet, wird dort das Öffnen des Containers in diesem Fall als autorisiert erfolgt bewertet.

Die Überwachungseinrichtung 10 bleibt während des zwischenzeitlichen Beladens des Containers aktiv. Der Container wird daher weiterhin überwacht. Die Überwachungseinrichtung 10 sendet weiterhin Ereignisdaten an das Analysezentrum 14. Wenn etwa einer der Sensoren 12 als Bewegungssensor oder als Temperatursensor ausgebildet ist, sendet dieser auch nach dem autorisierten Öffnen des Containers fortlaufend Daten zu Bewegungen innerhalb des Containers bzw. zur Containerinnentemperatur an das Analysezentrum 14.

Sobald das Beladen im Rahmen dieses Zwischenbeladevorgangs abgeschlossen ist, kann die berechtigte Person mittels eines weiteren Autorisierungscodes den Container erneut autorisiert verschließen.

Es wird somit insgesamt eine lückenlose Überwachung des Containers ermöglicht ausgehend von einem ersten autorisierten Verschließen über den gesamten Transportweg unter Einschluss möglicher Zwischenöffnungen bzw. Zwischenbeladungen bis zum Erreichen des Zielortes.

Als besonders wesentlicher Aspekt der Erfindung ist vorgesehen, die Autorisierungscodes als Funktionscodes auszubilden. Wie bereits vorstehend beschrieben, werden als Funktionscodes solche Autorisierungscodes bezeichnet, denen jeweils eine bestimmte Funktion zugeordnet ist. Funktionscodes tragen dabei eine ihre Zuordnung bzw. ihre Gruppenzugehörigkeit identifizierende Kennzeichnung. Dies sind Informationen bzw. Daten, die es ermöglichen, die Gruppenzugehörigkeit des jeweiligen Funktionscodes zu erkennen.

Neben ihrer Eigenschaft, zur Autorisierung des jeweiligen Öffnungs- bzw. Schließvorgangs des Frachtbehältnisses zu dienen, können diese zur Bestimmung bestimmter Zustände bzw. des jeweiligen Status des Containers eingesetzt werden. Je nach Art des jeweiligen Öffnungs- bzw. Schließvorgangs, den die berechtigte Person vornimmt, verwendet demnach die berechtigte Person zur Autorisierung des jeweiligen Vorgangs Funktionscodes unterschiedlicher Funktionscodegruppen. Die Analyse der übermittelten Funktionscodes im Analysezentrum 14, insbesondere mit Hilfe der Analyseeinrichtung 18, ermöglicht es - nach Feststellung der jeweiligen Gruppenzugehörigkeit - abzuleiten, in welchem Zustand und/oder an welchem Ort sich der Container befindet.

So kann die berechtigte Person für die Autorisierung der oben erwähnten Zwischenöffnung des Containers einen Funktionscode der Gruppe "Zwischenöffnung Container" verwenden.

Für die Autorisierung einer Öffnung am Zielort des Containers, nämlich einer Endöffnung desselben, kann ein Funktionscode der Gruppe "Endöffnung Container" eingesetzt werden.

Für die Autorisierung eines Verschließens am Startort des Containers kann ein Funktionscode der Gruppe "erstmaliges Verschließen" verwendet werden.

Für die Autorisierung eines Verschließens nach einer Zwischenöffnung eines Containers kann ein Funktionscode der Gruppe "Verschließen nach Zwischenöffnung" eingesetzt werden.

In weiterer Verfeinerung dieses Konzeptes ist es beispielsweise denkbar, mehrere Arten von Zwischenöffnungen zuzulassen, wobei jede einzelne Zwischenöffnung mittels eines Funktionscodes aus einer jeweils anderen Funktionsgruppe bewirkt wird.

Je nachdem, welche Art von Funktionscode die berechtigte Person dem Analysezentrum 14 übersendet, kann im Analysezentrum 14 demnach rückgeschlossen werden, um welche Art der Öffnung bzw. um welche Art des Verschließens des Containers es sich handelt.

Die physische Öffnung der Tür desselben wird - wie oben beschrieben - im Analysezentrum in so einem Fall durch die Übermittlung der Ereignisdaten des Türsensors 12 übermittelt. Die darüber hinaus gehende Information, um welche Art von Öffnung bzw. um welche Art von Verschließen es sich handelt, wird im Analysezentrum 14 anhand der Art des von der berechtigten Person übermittelten Funktionscodes ermittelt.

Die Unterscheidung der verschiedenen Arten von Funktionscodes ermöglicht es zudem, im Analysezentrum 14 den aktuellen Standort des Containers in einfacher Weise zu bestimmen. Vor Versendung des Containers liegen neben dem Start- bzw. Ausgangsort in der Regel der Zielort sowie gegebenenfalls weitere Orte zwischen Start- und Zielort fest, an denen Zwischenbeladungen bzw. Zwischenöffnungen des Containers erfolgen sollen. Nach Übermittlung der Funktionscodes entsprechend ihrer jeweiligen Art an das Analysezentrum 14 kann dieses ableiten, ob die von der berechtigten Person erfolgte Autorisierung des jeweiligen Öffnungsvorgangs bzw. analog des jeweiligen Schließvorgangs am Startort, am Zielort oder an einem der vorher festgelegten Orte für Zwischenöffnungen erfolgt ist.

In weiterer Ausbildung der Erfindung können Funktionscodes für Autorisierungen von Zwischenöffnungen vorgesehen sein, nach deren Empfang das Analysezentrum 14 bzw. die Analyseeinrichtung 18 zwar - wie weiter oben bereits beschrieben - die Ereignisdaten, die der Türsensor 12 nachfolgend übersendet, nicht weiter beachtet, sodass nachfolgende Türöffnungen oder Türschließungen (bis zu einem autorisierten Verschließen) nicht zu einem Alarmsignal im Analysezentrum 14 führen. Signale anderer Sensoren, wie etwa des Temperatursensors, können dagegen weiter be- bzw. ausgewertet werden.

So würde im Analysezentrum 14 ein Alarm ausgelöst werden, wenn die Ereignisdaten, die der bereits oben beschriebene Temperatursensor für Messungen der Containerinnentemperatur liefert, eine zu hohe Temperatur im Containerinnenraum zeigen. Dieses Szenario ist insbesondere für Kühlcontainer relevant.

Die Überwachung bzw. Auswertung auch der Signale des Türsensors 12 durch das Analysezentrum 14 würde dagegen erst dann wieder erfolgen, wenn das Schließen der Tür mit der entsprechenden Autorisierung des Schließvorgangs mit Hilfe eines geeigneten Funktionscodes "Verschließen nach Zwischenöffnung" einhergeht.

Eine weitere wichtige Möglichkeit zur Handhabung von Zwischenöffnungen ist, einen Funktionscode für die Autorisierung einer Zwischenöffnung einzusetzen, der zur Folge hat, dass das Analysezentrum 14 den nächsten physischen Schließvorgang der Tür, der der autorisierten Zwischenöffnung der Tür nachfolgt, automatisch als autorisiert bewertet, ohne dass die berechtigte Person einen separaten Funktionscode zur Autorisierung dieses Verschließens übersenden muss. Mit anderen Worten führt letztlich das nächste Sensorsignal, das der Türsensor 12 bei dem Schließen der Tür liefert, im Analysezentrum 14 zur Autorisierung des zugehörigen Schließvorgangs.

Sinnvollerweise ist im Übrigen die Gültigkeitsdauer von eingesetzten Funktionscodes, insbesondere solcher Funktionscodes für eine Zwischenöffnung eines Containers, zeitlich begrenzt, beispielsweise auf 15 oder 20 min.

Beispielsweise sendet zunächst eine zur Autorisierung einer Zwischenöffnung berechtigte Person den geeigneten Funktionscode an das Analysezentrum 14. Sollte sie in der nachfolgenden Zeit, in der der Funktionscode gültig ist, allerdings versäumen, den zugehörigen Türöffnungsvorgang physisch durchzuführen, würde dies im Analysezentrum 14 erkannt werden. Die Gültigkeit des Funktionscodes verfällt in der Folge. Im Anschluss kann dieser Funktionscode nicht weiter verwendet werden. Mit anderen Worten würde dieser Funktionscode zur Autorisierung eines nächsten Türöffnungsvorgangs nicht mehr eingesetzt werden können. Würde er dennoch für eine nächste Autorisierung einer Türöffnung verwendet werden, würde im Analysezentrum 14 die Ungültigkeit des Funktionscodes erkannt werden bzw. der Funktionscode nicht als gültig anerkannt werden. In diesem Fall würde der zugordnete physische Öffnungsvorgang ein Alarmsignal im Analysezentrum 14 auslösen.

Allgemein gesprochen wird demnach im Analysezentrum 14 überwacht, ob nach Empfang eines Funktionscodes innerhalb einer vorbestimmten Zeitspanne der zu dem Funktionscode gehörende bzw. der diesem zugeordnete Öffnungs- oder Schließvorgang der Frachtbehältnistür auch erfolgt.

Gemäß einer weiteren, auch eigenständig beanspruchbaren Ausführungsform der vorliegenden Erfindung sind Funktionscodes der Funktionsgruppe "autorisiertes Parken" vorgesehen.

Nach Empfang eines solchen, von einer berechtigten Person an das Analysezentrum 14 übermittelten Funktionscodes wird im Analysezentrum 14 der an das Analysezentrum 14 von einem entsprechenden, an die Überwachungseinrichtung 10 angeschlossenen Modul eines geeigneten Positionsbestimmungssystem (beispielsweise GPS) übermittelte, aktuelle Ort bzw. die aktuelle Position des Containers als Soll-Position festgehalten. Im weiteren Verlauf wird die aktuelle Ist-Position von dem Modul der Überwachungseinrichtung 10 kontinuierlich oder in bestimmten Zeitabständen weiter an das Analysezentrum 14 übermittelt. Sollte der Container im Anschluss an den Empfang des Funktionscodes bewegt werden, sodass die dann an das Analysezentrum 14 gemeldete Ist-Position von der Soll-Position in vorbestimmter Weise abweicht, würde im Analysezentrum ein Signal, insbesondere ein Alarmsignal ausgelöst werden.

So kann vorgesehen sein, dass der Container nach Empfang des Funktionscodes "autorisiertes Parken" relativ zu der Soll-Position entweder überhaupt nicht oder nur in vorbestimmten Grenzen bewegt werden darf. Mit anderen Worten kann vorgesehen sein, dass die Ist-Position nicht oder nur in einem vorbestimmten Maß von der Soll-Position abweichen darf.

Nach Empfang eines weiteren, von einer berechtigten Person übermittelten Funktionscodes "autorisiertes Parken beendet" würde die beschriebene Überwachung der Position des Containers beendet werden.

Wie der Fachmann des Standes der Technik erkennt, existieren naturgemäß verschiedene erfindungsgemäße Alternativen zu den oben beschriebenen Ausführungsbeispielen. Wie der Fachmann insbesondere erkennt, existieren verschiedene Möglichkeiten, die einzelnen Komponenten des Systems auszubilden und/oder miteinander über geeignete Datenschnittstellen miteinander zu verbinden, um das erfindungsgemäße Verfahren durchzuführen.

### Bezugszeichenliste

- 10: Überwachungseinrichtung
- 11: Steuereinheit
- 12: Sensor
- 14: Analysezentrum
- 15: Kommunikationsmodul
- 16: Autorisierungseinheit
- 18: Computereinrichtung
- 20: Datenbank

## Patentansprüche

1. Verfahren zur Überwachung der Integrität eines oder mehrerer Frachtbehältnisse entlang eines Transportwegs, wobei mindestens ein Frachtbehältnis eine diesem zugeordnete Überwachungseinrichtung (10) aufweist, die über mindestens einen, die Integrität des Frachtbehältnisses überwachenden Überwachungssensor (12) verfügt, wobei nach der Erfassung eines die Frachtbehältnisintegrität verletzenden Ereignisses durch den Überwachungssensor (12) einem entfernten Analysezentrum (14), insbesondere einer dem Analysezentrum (14) zugeordneten Analyseeinrichtung (18), Ereignisdaten übermittelt werden, die die Integritätsverletzung repräsentieren, wobei in dem Analysezentrum (14), insbesondere in der diesem zugeordneten Analyseeinrichtung (18), die übermittelten Ereignisdaten anhand vorbestimmter Kriterien im Hinblick auf eine entweder berechtigte - autorisierte - oder eine unberechtigte - unautorisierte - Integritätsverletzung des Frachtbehältnisses bewertet werden, und wobei ein Öffnen oder ein Verschließen des Frachtbehältnisses als berechtigte bzw. autorisierte Integritätsverletzung bewertet wird, falls dem Analysezentrum (14) zu den diese Integritätsverletzung repräsentierenden Ereignisdaten ein die Berechtigung des Öffnungsvorgangs bzw. des Schließvorgangs repräsentierender, elektronischer Autorisierungscode übersendet wird, **dadurch gekennzeichnet, dass** zur Unterscheidung unterschiedlicher Arten von Öffnungsvorgängen und/oder unterschiedlicher Arten von Schließvorgängen jeweils Autorisierungscodes aus unterschiedlichen Funktionsgruppen - Funktionscodes - verwendet werden, sodass im Analysezentrum (14) anhand der Art des jeweils empfangenen Funktionscodes bestimmt werden kann, welche Art von Öffnungsvorgang und/oder welche Art von Schließvorgang erfolgt ist bzw. erfolgen soll.

2. Verfahren gemäß Anspruch 1, **dadurch gekennzeichnet, dass** zur Autorisierung eines erstmaligen Schließvorgang eines Frachtbehälters zu Beginn eines Transports eine andere Funktionscodeart verwendet wird als zur Autorisierung eines späteren weiteren Schließvorgangs, und/oder dass zur Autorisierung einer erstmaligen Öffnung des Frachtbehältnisses vor Abschluss eines Transports - Zwischenöffnung - eine andere Funktionscodeart verwendet wird als zur Autorisierung eines späteren, weiteren autorisierten Öffnungsvorgangs, insbesondere einer Endöffnung bei Abschluss des Transports.

3. Verfahren gemäß Anspruch 1 oder 2, **dadurch gekennzeichnet, dass** die Funktionscodes gleicher Art bzw. aus derselben Funktionsgruppe ein gemeinsames Kennzeichen aufweisen, mittels dessen das Analysezentrum (14) Funktionscodes unterschiedlicher Funktionscodearten hinsichtlich ihrer Funktionsgruppenzugehörigkeit unterscheiden kann.

4. Verfahren gemäß einem oder mehrerer der vorhergehenden Ansprüche, **dadurch gekennzeichnet, dass** das Analysezentrum (14) übermittelte Ereignisdaten eines ersten Sensors oder einer ersten Gruppe von Sensoren der Überwachungseinrichtung (10), insbesondere mindestens eines Türsensors, der den Zustand - geschlossen versus geöffnet - der Tür des Frachtbehältnisses überwacht, nicht weiter bewertet, nachdem es einen Funktionscode für eine autorisierte Zwischenöffnung sowie die dem entsprechenden (Zwischen)Öffnungsvorgang des Frachtbehältnisses zugeordneten Ereignisdaten empfangen hat, dass das Analysezentrum (14) allerdings Ereignisdaten eines zweiten Sensors bzw. einer zweiten Gruppe von Sensoren der Überwachungseinrichtung (10) weiter bewertet, insbesondere mindestens eines Sensors zur Messung der Temperatur im Inneren des Frachtbehältnisses.

5. Verfahren gemäß Anspruch 4, **dadurch gekennzeichnet, dass** das Analysezentrum (14) weder Ereignisdaten des ersten Sensors bzw. der ersten Gruppe von Sensoren noch die des zweiten Sensors bzw. der zweiten Gruppe von Sensoren weiter auswertet, sobald es einen Funktionscode für eine autorisierte Endöffnung des Frachtbehältnisses empfangen hat oder sobald es sowohl diesen Funktionscode als auch die dem entsprechenden Endöffnungsvorgang des Frachtbehältnisses zugeordneten Ereignisdaten empfangen hat.

6. Verfahren gemäß einem oder mehrerer der vorhergehenden Ansprüche, **dadurch gekennzeichnet, dass** für eine autorisierte Zwischenöffnung des Frachtbehältnisses ein Funktionscode einer Funktionsgruppe verwendet werden kann, der so ausgebildet ist, dass das Analysezentrum (14) nach dessen Empfang den nächsten folgenden Schließvorgang des Frachtbehältnisses als autorisiert erfolgt wertet.

7. Verfahren gemäß einem oder mehrerer der vorhergehenden Ansprüche, **dadurch gekennzeichnet, dass** die Funktionscodes für ein autorisiertes Öffnen und/oder Schließen des Frachtbehältnisses, insbesondere für ein autorisiertes Zwischenöffnen, derart ausgebildet sind, dass der zugehörige physische Öffnungs- bzw. Schließvorgang des Frachtbehältnisses nur als autorisiert erfolgt gewertet wird, falls die zugehörige Öffnung bzw. das zugehörige Schließen innerhalb einer vorgegebenen Zeitspanne nach Empfang des Funktionscodes durch das Analysezentrum erfolgt.

8. Verfahren gemäß Anspruch 7, **dadurch gekennzeichnet, dass** ein Funktionscode, der für ein autorisiertes Öffnen und/oder Schließen verwendet wurde, bei dem der physische Öffnungs- oder Schließvorgang außerhalb der vorgegebenen Zeitspanne erfolgt ist, seine Gültigkeit verliert, sodass er nicht erneut für eine Autorisierung eines Öffnungs- bzw. Schließvorgangs eingesetzt werden kann.

9. Verfahren gemäß einem oder mehrerer der vorhergehenden Ansprüche, **dadurch gekennzeichnet, dass** jeder Funktionscode nur zur Autorisierung eines einzigen Öffnungsvorgangs oder eines einzigen Schließvorgangs des Frachtbehältnisses eingesetzt werden kann, sodass nach erstmaliger Verwendung eines Funktionscodes mit diesem Funktionscode kein weiterer Öffnungs- oder Schließvorgang autorisiert werden kann.

10. Verfahren gemäß einem oder mehrerer der vorhergehenden Ansprüche, **dadurch gekennzeichnet, dass** bei Überwachung mehrerer Frachtbehältnisse jedem Frachtbehältnis eine eigene Überwachungseinrichtung (10) zugeordnet ist, wobei jeder Überwachungseinrichtung (10) eine Menge von Funktionscodes eindeutig zugewiesen ist, und wobei, insbesondere nach erstmaligem Verschließen des der jeweiligen Überwachungseinrichtung (10) zugeordneten Frachtbehältnisses, die der jeweiligen Überwachungseinrichtung (10) zugewiesenen Funktionscodes der Menge von Funktionscodes nur für Autorisierungen von Öffnungs- oder Schließvorgängen desjenigen Frachtbehältnisses eingesetzt werden können, dem die der Menge von Funktionscodes zugewiesene Überwachungseinrichtung (10) zugeordnet ist, sodass mit diesen Funktionscodes keine Öffnungs- oder Schließvorgänge anderer Frachtbehältnisse mit anderen Überwachungseinrichtungen (10) autorisiert werden können.

11. System zur Überwachung der Integrität von einem oder mehreren Frachtbehältnissen entlang eines Transportwegs, insbesondere zur Durchführung des Verfahrens nach einem oder mehreren der vorhergehenden Ansprüche, wobei mindestens ein Frachtbehältnis eine diesem zugeordnete Überwachungseinrichtung (10) aufweist, die über mindestens einen, die Integrität des Frachtbehältnisses überwachenden Überwachungssensor (12) verfügt, wobei nach der Erfassung eines die Frachtbehältnisintegrität verletzenden Ereignisses durch den Überwachungssensor (12) einem entfernten Analysezentrum (14), insbesondere einer dem Analysezentrum (14) zugeordneten Analyseeinrichtung (18), Ereignisdaten übermittelbar sind, die die Integritätsverletzung repräsentieren, wobei in dem Analysezentrum (14), insbesondere mittels einer zugeordneten Analyseeinrichtung (18), die übermittelten Ereignisdaten anhand vorbestimmter Kriterien im Hinblick auf eine entweder berechtigte - autorisierte - oder eine unberechtigte - unautorisierte - Integritätsverletzung des Frachtbehältnisses bewertbar sind, und wobei ein Öffnen oder ein Verschließen des Frachtbehältnisses als berechtigte bzw. autorisierte Integritätsverletzung bewertbar ist, falls dem Analysezentrum (14) zu den diese Integritätsverletzung repräsentierenden Ereignisdaten ein die Berechtigung des Öffnungsvorgangs bzw. des Schließvorgangs repräsentierender, elektronischer Autorisierungscode vorliegt, **dadurch gekennzeichnet, dass** zur Unterscheidung unterschiedlicher Arten von Öffnungsvorgängen und/oder unterschiedlicher Arten von Schließvorgängen jeweils Autorisierungscodes aus unterschiedlichen Funktionsgruppen - Funktionscodes - verwendbar sind, sodass im Analysezentrum (14) anhand der Art des jeweils empfangenen Funktionscodes bestimmbar ist, welche Art von Öffnungsvorgang und/oder welche Art von Schließvorgang erfolgt ist bzw. erfolgen soll.

## Claims

1. A method for monitoring the integrity of one or more freight containers along a transport route, wherein at least one freight container has a monitoring device (10) associated therewith that has at least one monitoring sensor (12) monitoring the integrity of the freight container, wherein the sensing of an event violating the freight container integrity by the monitoring sensor (12) is followed by event data, representing the integrity violation, being transmitted to a remote analysis center (14), particularly an analysis device (18) associated with the analysis center (14), wherein the analysis center (14), particularly the analysis device (18) associated therewith, rates the transmitted event data using predetermined criteria in respect of either a sanctioned - authorized - or an unsanctioned - unauthorized - integrity violation of the freight container, and wherein opening or closing of the freight container is rated as a sanctioned or authorized integrity violation if an electronic authorization code representing the sanction for the opening operation or the closing operation is sent to the analysis center (14) for the event data representing this integrity violation, **characterized in that** different types of opening operations and/or different types of closing operations are distinguished by using respective authorization codes from different function groups - function codes -, as result of which the analysis center (14) can use the type of respectively received function code to determine what type of opening operation and/or what type of closing operation has taken place or is meant to take place.

2. The method as claimed in claim 1, **characterized in that** a first-time closing operation for a freight container at the beginning of transport is authorized using a different type of function code than for authorizing a later further closing operation, and/or **in that** first-time opening of the freight container prior to the conclusion of transport - interim opening - is authorized using a different type of function code than for authorizing a later, further authorized opening operation, in particular final opening upon the conclusion of the transport.

3. The method as claimed in claim 1 or 2, **characterized in that** the function codes of the same type or from the same function group have a shared identification that the analysis center (14) can use to distinguish function codes of different function code types in respect of the function group affiliation thereof.

4. The method as claimed in one or more of the preceding claims, **characterized in that** the analysis center (14) does not continue to rate transmitted event data from a first sensor or from a first group of sensors of the monitoring device (10), particularly from at least one door sensor that monitors the state - closed versus open - of the door of the freight container, after it has received a function code for authorized interim opening and also the event data associated with the relevant (interim) opening operation for the freight container, but **in that** the analysis center (14) continues to rate event data from a second sensor or from a second group of sensors of the monitoring device (10), particularly from at least one sensor for measuring the temperature inside the freight container.

5. The method as claimed in claim 4, **characterized in that** the analysis center (14) continues to evaluate neither event data from the first sensor or from the first group of sensors nor those from the second sensor or from the second group of sensors as soon as it has received a function code for authorized final opening of the freight container or as soon as it has received both this function code and the event data associated with the relevant final opening operation for the freight container.

6. The method as claimed in one or more of the preceding claims, **characterized in that** for authorized interim opening of the freight container it is possible to use a function code from a function group, which function code is designed such that the analysis center (14), after receiving said function code, rates the next closing operation that follows for the freight container as having taken place with authorization.

7. The method as claimed in one or more of the preceding claims, **characterized in that** the function codes for authorized opening and/or closing of the freight container, particularly for authorized interim opening, are in a form such that the associated physical opening or closing operation for the freight container is rated as having taken place with authorization only if the associated opening or the associated closing takes place within a prescribed period of time after the function code has been received by the analysis center.

8. The method as claimed in claim 7, **characterized in that** a function code that has been used for authorized opening and/or closing for which the physical opening or closing operation has taken place outside the prescribed period of time loses its validity, as a result of which it cannot be used again for authorizing an opening or closing operation.

9. The method as claimed in one or more of the preceding claims, **characterized in that** each function code can be used only for authorizing a single opening operation or a single closing operation for the freight container, as a result of which, after a function code has been used for the first time, this function code cannot be used to authorize a further opening or closing operation.

10. The method as claimed in one or more of the preceding claims, **characterized in that** when a plurality of freight containers are monitored, each freight container has a dedicated associated monitoring device (10), wherein each monitoring device (10) has an explicitly assigned set of function codes, and wherein, particularly after the freight container associated with the respective monitoring device (10) has been closed for the first time, the function codes assigned to the respective monitoring device (10) from the set of function codes can be used only for authorizations for opening or closing operations for that freight container that has the associated monitoring device (10) assigned to the set of function codes, as a result of which these function codes cannot be used to authorize opening or closing operations for other freight containers with other monitoring devices (10).

11. A system for monitoring the integrity of one or more freight containers along a transport route, particularly for carrying out the method as claimed in one or more of the preceding claims, wherein at least one freight container has a monitoring device (10) associated therewith that has at least one monitoring sensor (12) monitoring the integrity of the freight container, wherein the sensing of an event violating the freight container integrity by the monitoring sensor (12) is followed by event data, representing the integrity violation, being able to be transmitted to a remote analysis center (14), particularly an analysis device (18) associated with the analysis center (14), wherein the analysis center (14), particularly using an associated analysis device (18), can rate the transmitted event data using predetermined criteria in respect of either a sanctioned - authorized - or an unsanctioned - unauthorized - integrity violation of the freight container, and wherein opening or closing of the freight container can be rated as a sanctioned or authorized integrity violation if an electronic authorization code representing the sanction for the opening operation or the closing operation is available to the analysis center (14) for the event data representing this integrity violation, **characterized in that** different types of opening operations and/or different types of closing operations can be distinguished by using respective authorization codes from different function groups - function codes -, as result of which the analysis center (14) can use the type of respectively received function code to determine what type of opening operation and/or what type of closing operation has taken place or is meant to take place.

## Revendications

1. Procédé de surveillance de l'intégrité d'un ou plusieurs réceptacles de fret le long d'un trajet de transport, dans lequel au moins un réceptacle de fret comporte un dispositif de surveillance (10) qui lui est associé, qui dispose d'au moins un capteur de surveillance (12) surveillant l'intégrité du réceptacle de fret, dans lequel, après que le capteur de surveillance (12) a détecté un événement portant atteinte à l'intégrité du réceptacle de fret, des données d'événement représentant la violation d'intégrité sont transmises à un centre d'analyse distant (14), en particulier à un dispositif d'analyse (18) associé au centre d'analyse (14), dans lequel les données d'événement transmises sont évaluées dans le centre d'analyse (14), en particulier dans le dispositif d'analyse (18) qui lui est associé, sur la base de critères prédéterminés afin de déterminer s'il s'agit d'une violation d'intégrité justifiée - autorisée - ou injustifiée - non autorisée - du réceptacle de fret, et dans lequel une ouverture ou une fermeture du réceptacle de fret est évaluée comme étant une violation d'intégrité justifiée ou autorisée dans le cas où un code d'autorisation électronique, représentant l'autorisation du processus d'ouverture ou du processus de fermeture, est envoyé au centre d'analyse (14) pour les données d'événement représentant cette violation d'intégrité, **caractérisé en ce que**, pour distinguer des types de processus d'ouverture différents et/ou des types de processus de fermeture différents, on utilise des codes d'autorisation respectifs appartenant à des groupes de fonctions - codes de fonctions - différents, de manière à ce qu'il soit possible de déterminer dans le centre d'analyse (14), sur la base du type de code de fonction respectivement reçu, le type de processus d'ouverture et/ou le type de processus de fermeture qui a été effectué ou doit être effectué.

2. Procédé selon la revendication 1, **caractérisé en ce que**, pour l'autorisation d'un processus de fermeture effectué une première fois d'un réceptacle de fret au début d'un transport, on utilise un autre type de code de fonction que pour l'autorisation d'un autre processus de fermeture ultérieur, et/ou **en ce que**, pour l'autorisation d'une ouverture effectuée une première fois du réceptacle de fret avant la fin d'un transport - ouverture intermédiaire - on utilise un autre type de code de fonction que pour l'autorisation d'un autre processus d'ouverture autorisé ultérieur, en particulier pour une ouverture finale à la fin du transport.

3. Procédé selon la revendication 1 ou 2, **caractérisé en ce que** les codes de fonction d'un même type ou provenant du même groupe de fonctions présentent une caractéristique commune au moyen de laquelle le centre d'analyse (14) peut différencier des codes de fonction de différents types de codes de fonction en ce qui concerne leur appartenance à un groupe de fonctions.

4. Procédé selon l'une ou plusieurs des revendications précédentes, **caractérisé en ce que** le centre d'analyse (14) cesse de surveiller les données d'événement transmises par le premier capteur ou par un premier groupe de capteurs du dispositif de surveillance (10), notamment d'au moins un capteur de porte qui surveille l'état - fermé ou ouvert - de la porte du réceptacle de fret, après qu'il a reçu un code de fonction destiné à une ouverture intermédiaire autorisée ainsi que les données d'événement associées au processus d'ouverture (intermédiaire) correspondant du récipient de fret, **en ce que** le centre d'analyse (14) continue toujours d'évaluer des données d'événement d'un deuxième capteur ou d'un deuxième groupe de capteurs du dispositif de surveillance (10), notamment d'au moins un capteur destiné à mesurer la température à l'intérieur du réceptacle de fret.

5. Procédé selon la revendication 4, **caractérisé en ce que** le centre d'analyse (14) ne continue d'évaluer ni les données d'événement du premier capteur ou du premier groupe de capteurs, ni celles du second capteur ou du second groupe de capteurs lorsqu'il a reçu un code de fonction pour une ouverture finale autorisée du réceptacle de fret ou lorsqu'il a reçu ledit code de fonction ainsi que les données d'événement associées au processus d'ouverture final correspondant de réceptacle du fret.

6. Procédé selon l'une ou plusieurs des revendications précédentes, **caractérisé en ce que**, pour une ouverture intermédiaire autorisée du réceptacle de fret, il est possible d'utiliser un code de fonction d'un groupe de fonctions qui est conçu de manière à ce que le centre d'analyse (14) évalue, après sa réception, le processus de fermeture immédiatement suivant du réceptacle de fret comme ayant été effectué de manière autorisée.

7. Procédé selon l'une ou plusieurs des revendications précédentes, **caractérisé en ce que** les codes de fonction destinés à une ouverture et/ou une fermeture autorisée du réceptacle de fret, notamment destinés à une ouverture intermédiaire autorisée, sont conçus de manière à ce que le processus d'ouverture ou de fermeture physique associé du réceptacle de fret n'est évalué comme ayant été effectué de manière autorisée que dans le cas où l'ouverture associée ou la fermeture associée est effectuée au cours d'un intervalle de temps prédéterminé après la réception du code de fonction par le centre d'analyse.

8. Procédé selon la revendication 7, **caractérisé en ce qu'**un code de fonction ayant été utilisé pour une ouverture et/ou une fermeture autorisée, lors de laquelle le processus d'ouverture ou de fermeture physique est effectué à l'extérieur de l'intervalle de temps prédéterminé, perd sa validité de telle sorte qu'il ne peut pas de nouveau être utilisé pour l'autorisation d'un processus d'ouverture ou de fermeture.

9. Procédé selon l'une ou plusieurs des revendications précédentes, **caractérisé en ce que** chaque code de fonction ne peut être utilisé que pour l'autorisation d'un processus d'ouverture unique ou d'un processus de fermeture unique du réceptacle de fret, de telle sorte qu'après la première utilisation d'un code de fonction, aucun processus d'ouverture ou de fermeture ne peut plus être autorisé avec ledit code de fonction.

10. Procédé selon l'une ou plusieurs des revendications précédentes, **caractérisé en ce que**, lors de la surveillance de plusieurs réceptacles de fret, un dispositif de surveillance propre (10) est associé à chaque réceptacle de fret, dans lequel une certaine quantité de codes de fonction est affectée de manière unique à chaque dispositif de surveillance (10) et dans lequel, notamment après une première fermeture du réceptacle de fret associé au dispositif de surveillance respectif (10), les codes de fonction affectés au dispositif de surveillance respectif (10) correspondant à ladite quantité de codes de fonction ne peuvent être utilisés que pour des autorisations de processus d'ouverture ou de fermeture du réceptacle de fret auquel est associé le dispositif de surveillance (10) affecté à ladite quantité de codes de fonction, de telle sorte qu'aucun processus d'ouverture ou de fermeture d'autres réceptacles de fret ne peut être autorisé au moyen d'autres dispositifs de surveillance (10) avec ledit code de fonction.

11. Système de surveillance de l'intégrité d'un ou de plusieurs réceptacles de fret le long d'un trajet de transport, en particulier pour mettre en oeuvre le procédé selon l'une ou plusieurs des revendications précédentes, dans lequel au moins un réceptacle de fret comporte un dispositif de surveillance (10) qui lui est associé, qui dispose d'au moins un capteur de surveillance (12) surveillant l'intégrité du réceptacle de fret, dans lequel, après que le capteur de surveillance (12) a détecté un événement portant atteinte à l'intégrité du réceptacle de fret, des données d'événement représentant la violation d'intégrité peuvent être transmises à un centre d'analyse distant (14), en particulier à un dispositif d'analyse (18) associé au centre d'analyse (14), dans lequel lesdites données d'événement transmises peuvent être évaluées dans le centre d'analyse (14), en particulier au moyen d'un dispositif d'analyse (18) qui lui est associé, sur la base de critères prédéterminés afin de déterminer s'il s'agit d'une violation d'intégrité justifiée - autorisée - ou injustifiée - non autorisée - du réceptacle de fret, et dans lequel une ouverture ou une fermeture du réceptacle de fret peut être évaluée comme étant une violation d'intégrité justifiée ou autorisée dans le cas où un code d'autorisation électronique, représentant l'autorisation du processus d'ouverture ou du processus de fermeture, est envoyé au centre d'analyse (14) pour les données d'événement représentant cette violation d'intégrité, **caractérisé en ce que**, pour distinguer des types de processus d'ouverture différents et/ou des types de processus de fermeture différents, on utilise des codes d'autorisation respectifs appartenant à des groupes de fonctions - codes de fonction différents, de manière à ce qu'il soit possible de déterminer dans le centre d'analyse (14), sur la base du type du code de fonction respectivement reçu, le type de processus d'ouverture et/ou le type de processus de fermeture qui a été effectué ou doit être effectué.
